Europäisches Patentamt

**European Patent Office**

**Office européen des brevets**

(19)

(11) Publication number: **0 020 360 B1**

(12) # EUROPEAN PATENT SPECIFICATION

(45) Date of publication of patent specification: **25.05.83**

(51) Int. Cl.³: **F 16 H 41/30**

(21) Application number: **79900940.2**

(22) Date of filing: **11.12.78**

(86) International application number:
**PCT/US78/00200**

(87) International publication number:
**WO 80/01194 12.06.80 Gazette 80/13**

(54) **FLUID TRANSMISSION CONTROL SYSTEM.**

(43) Date of publication of application:
**07.01.81 Bulletin 81/1**

(45) Publication of the grant of the patent:
**25.05.83 Bulletin 83/21**

(84) Designated Contracting States:
**FR GB**

(56) References cited:
**US - A - 2 638 746**
**US - A - 3 347 042**
**US - A - 3 886 814**

(73) Proprietor: **CATERPILLAR TRACTOR CO.**
**100 Northeast Adams Street**
**Peoria Illinois 61629 (US)**

(72) Inventor: **MASTER, Ralph E.**
**201 East Rosewood Drive**
**Washington, IL 61571 (US)**

(74) Representative: **Brunner, Michael John et al,**
**Gill Jennings & Every 53/64 Chancery Lane**
**London WC2A 1HN (GB)**

Courier Press, Leamington Spa, England.

Fluid transmission control system

The present invention relates to a transmission control system, and more particularly to a system for improved fluid flow control with respect to a torque converter and an associated heat exchanger.

It is known that some torque converter transmissions have experienced fluid flow control problems including undesirable pressure fluctuations at the fluid inlet passage to the torque converter. Moreover, pressure relief valves or regulators incorporated in such a transmission system have relieved undesirably excessive proportions of fluid from the inlet passage of the torque converter directly to the outlet of a cooler which receives and cools fluid from the outlet passage of the torque converter. Thus, under certain conditions an undesirable portion of the circulating fluid bypasses the cooler via that relief valve, so that the torque converter cooler flow rate does not increase uniformly over the operating range as desired.

A large number of different valves are known which can modulate and control the fluid flow rate to and from a torque converter or alternatively the pressure at the inlet and/or outlet thereof (see for example US—A—3347042). Some valves can even control multiple combinations of these parameters. However, these valves are not only usually complex and costly in construction, but also they take up valuable room where space is at a premium.

The above mentioned U.S. patent specification also shows that the inlet and outlet to the torque converter can be selectively connected to bypass fluid around the torque converter. However, the construction is complex.

According to the present invention a transmission control system comprising a torque converter having fluid inlet and fluid outlet passages, a source of fluid pressure, a pressure regulating valve for passing fluid from the source above a preselected pressure to the fluid inlet passage, a heat exchanger connected to the outlet passage, a pressure relief valve allowing fluid flow in bypassing relation to the torque converter and the heat exchanger, and a flow limiting passage capable of connecting the fluid inlet and outlet passages (64, 80), is characterized in that the fluid inlet and outlet passages (64, 80) are defined on the radially outer and inner sides of a tubular member of the torque converter and that the flow limiting passage permanently directly connects the fluid inlet and outlet passages through the tubular member.

Thus, although a preselected amount of fluid is caused to continually bypass the torque converter, such amount can still be directed, as desired, to the torque converter cooler.

Advantageously, because of the incorporation of the controlled fluid flow bypass passage around the torque converter, a pressure relief valve associated with the transmission control system is no longer adversely affected by back pressure fluctuations at the inlet passage to the converter, and also the fluid flow rate through both the cooler and the torque converter increase uniformly in proportion to an increase in the torque converter input speed.

The invention also includes a torque converter for such a transmission control system, the torque converter being characterised in that the fluid inlet and outlet passages are defined on the radially outer and inner sides of a tubular member of the torque converter and in that the flow limiting passage permanently directly connects the inlet and outlet passages through the tubular member.

Preferably the torque converter has a turbine element; a rotary shaft connected to the turbine element and lying within the tubular member; a pump element; and a rotary member connected to the pump element and surrounding the tubular member, the inlet passage to the torque converter being provided between the rotary member and the tubular member and the outlet passage being provided between the tubular member and the rotary shaft. The tubular member preferably connects to a reactor element in the torque converter.

One example of a transmission system according to the present invention will now be described with reference to the accompanying drawings in which:—

Figure 1 is a diagrammatic view of one embodiment of the transmission control system of the present invention with a portion of the valving shown therein broken open to better illustrate details thereof.

Figure 2 is a diagrammatic view of the torque converter shown in Figure 1, with a fragmentary portion thereof shown in cross section to illustrate certain fluid passages therein.

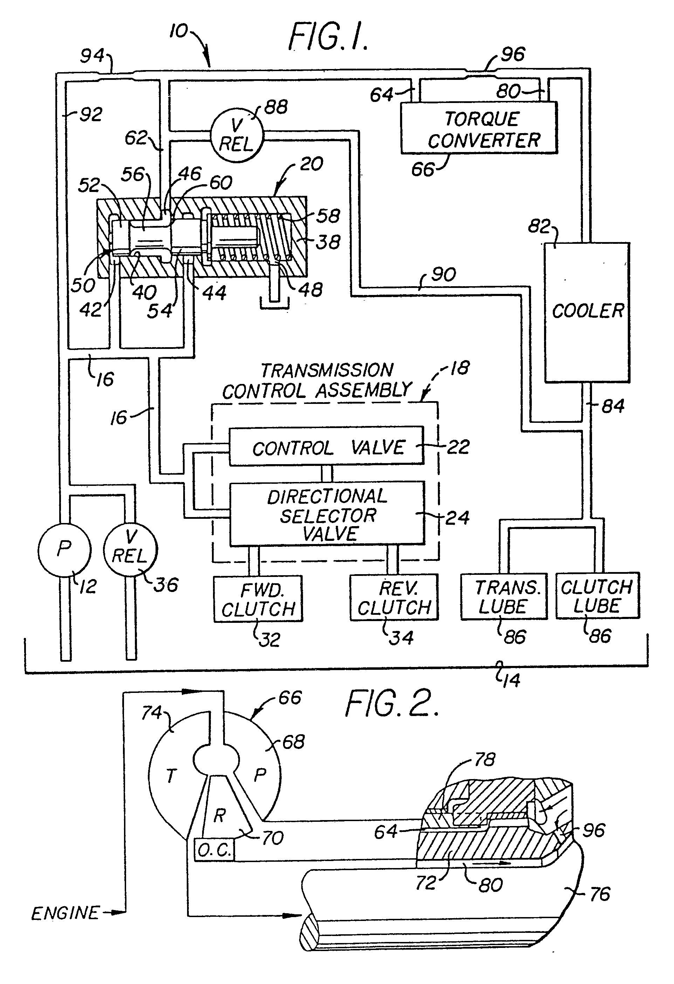

Referring initially to Figure 1, a transmission control system 10 is shown as having a pump 12 which draws fluid from a sump 14 and directs it through a main line conduit 16 as a fluid pressure source to a transmission control assembly 18 and to a pressure regulator valve or pressure relief valve 20. The transmission control assembly 18 includes a control or inching valve 22 connected to the pressure source and a directional selector valve 24 connected to the control valve 22 and the pressure source. Manual control of the directional selector valve enables a forward clutch 32 or a reverse clutch 34 to be controllably supplied with pressure fluid for operation of the associated vehicle. Such transmission control assembly 18 can be of conventional construction.

A known pressure relief valve 36 is connected to the main line conduit 16 to provide a preselected maximum pressure level thereat. For example, at a setting of about 1380 KPa (200 psi) the relief valve 36 relieves fluid from the main line conduit back to the sump 14.

The pressure regulator valve 20 has a housing 38 defining an elongate cylindrical bore 40, a pressure port 42, an inlet port 44, an outlet port 46, and a drain port 48, all communicating with the bore. A valve spool 50 having a pair of spaced apart cylindrical lands 52, 54 and a neck 56 is reciprocably disposed in the bore, and the valve spool is continually biased to the left when viewing the drawing by a compression spring 58. A preselected pressure at the pressure port 42, for example of about 830 KPa (120 psi), serves to overcome the spring and move the spool to the right when viewing the drawing. A throttling slot 60 formed in the land 54 is then placed in open communication with the inlet port 44, whereupon fluid in the main line conduit 16 is relieved to an outlet conduit 62 via the inlet port, the throttling slot and the outlet port 46. A major purpose of the pressure regulating valve 20 is to cut off fluid flow to the torque converter 66 when the pressure in the main line conduit drops below its preselected pressure level setting, and thus to assure that the transmission control assembly 18 will get full benefit of this available flow from the pump 12 for fast response during a transmission shift.

Fluid in the outlet conduit 62 from the regulating valve 20 is directed to an inlet passage 64 leading to a hydrodynamic torque converter 66. As shown in Figure 2, this torque converter has a pump or impeller element 68 coupled to an engine, not shown, a reactor element 70 suitably coupled to a stationary tubular member 72, and a turbine element 74 connected to a rotary shaft 76 leading to a transmission, not shown.

With the construction of the torque converter 66 shown in Figure 2 it is apparent that fluid charging pressure is directed to the torque converter via the inlet passage 64 located in part between the tubular member 72 and a surrounding rotary member 78. Fluid is communicated from the torque converter via an outlet passage 80 defined in part between the shaft 76 and the tubular member 72. Because of such relationship the inlet and outlet passages 64 and 80 present some restriction to fluid flow.

Referring again to Figure 1, from the outlet passage 80 of the torque converter 66 heated fluid flows to a cooler or heat exchanger 82 where its temperature is desirably reduced prior to being passed on to a conduit 84 and to a plurality of lubrication points 86.

A pressure relief valve 88 of known construction is in fluid communication with the conduit 62 leading to the inlet passage 64 of the torque converter 66 such that at a preselected pressure thereat, for example about 900 KPa (130 psi), fluid is allowed to flow from the conduit 62 to a conduit 90 and the conduit 84 in bypassing relation to the cooler 82. This relief valve protects the torque converter 66 by limiting the maximum pressure level at the inlet passage thereto.

A branch conduit 92 having a flow control restriction 94 therein is connected between the main line conduit 16 and the inlet passage 64 of the torque converter 66. The flow control restriction is preferably about 1.52 mm (0.060″) in diameter so that a fluid flow rate of about 1.9 to 3.8 litres/min (1/2 to 1 gpm) will be directly communicated to the inlet passage of the torque converter to insure that it is supplied with at least a preselected minimum amount of fluid at all times, such as during a transmission shift when the pressure regulator valve 20 is closed.

In accordance with the present invention, a flow limiting passage 96 having an effective orifice diameter of about 3.8 mm (0.150″) is directly connected between the inlet passage 64 and the outlet passage 80 in fluid bypassing relation to the torque converter 66. In this way, a preselected proportion of the fluid flow to the inlet passage 64 can be continually passed directly to the cooler 82.

In actual operation of the transmission control system 10, the input speed of the impeller 68 of the torque converter 66 varies with engine speed, for example from about 1000 to 2400 rpm. With the transmission in neutral the fluid flow rate through the torque converter desirably increases relatively uniformly from about 7.6 to 18.9 litres/min (2 to 5 gpm). Simultaneously, the cooler flow rate desirably increases relatively uniformly from about 15.1 to 30.3 litres/min (4 to 8 gpm). Thus a flow rate of about 7.6 to 11.4 litres/min (2 to 3 gpm) continually occurs through the torque converter bypass passage 96.

As best shown in Figure 2, the flow limiting passage 96 is located in the region of the torque converter 66. For example, the flow limiting passage 96 can be defined in the tubular member 72 operatively connected to the converter reactor element 70. In the embodiment illustrated the flow limiting passage 96 extends radially through the tubular member to be in direct fluid communication with the inlet and outlet passages 64, 80 located threat. In such location the flow limiting passage results in immediately improved operating performance of the transmission control assembly, without the need to provide another valve to solve the previously set forth problems or without any significant change to the system.

## Claims

1. A transmission control system (10) comprising a torque converter (66) having fluid inlet and outlet passages (64, 80), a source of fluid pressure (12), a pressure regulating valve (20) for passing fluid from the source (12) above a preselected pressure to the fluid inlet passage (64), a heat exchanger (82) connected to the outlet passage (80), a pressure relief valve (88) allowing fluid flow in bypassing relation to the torque converter (66) and the heat exchanger (82), and a flow limiting passage (96) capable of connecting the fluid inlet and outlet passages (64, 80), characterized in that the fluid inlet and outlet passages (64, 80) are defined on the radially outer and inner sides of a tubular member (72) of the torque converter (66) and that the flow limiting passage (96) permanently directly connects the fluid inlet and outlet passages (64, 80) through the tubular member.

2. A transmission control system according to claim 1, wherein the torque converter (66) has a turbine element (74); a rotary shaft (76) connected to the turbine element (74) and lying within the tubular member (72); a pump element (68); and a rotary member (78) connected to the pump element (68) and surrounding the tubular member (72), the inlet passage (64) to the torque converter being provided between the rotary member (78) and the tubular member (72) and the outlet passage (80) being provided between the tubular member (72) and the rotary shaft (76).

3. A transmission control system according to claim 1 or claim 2, wherein the torque converter (66) has a reactor element (70) to which the tubular member (72) is connected.

4. A torque converter (66) for transmission control system (10) having a source of fluid pressure (12), a pressure regulating valve (20) for passing fluid from the source (12) above a preselected pressure to the torque converter (66), a heat exchanger (82) connected to the outlet passage (80) and a pressure relief valve (88) allowing fluid flow in bypassing relation to the torque converter (66) and the heat exchanger, the torque converter (66) being bypassed by a flow limiting passage (96) capable of connecting the fluid inlet and outlet passages (64, 80) characterized in that the fluid inlet and outlet passages (64, 80) are defined on the radially outer and inner sides of a tubular member (72) of the torque converter (66) and in that the flow limiting passage permanently directly connects the inlet and outlet passages through the tubular member (72).

5. A torque converter according to claim 4, further including a turbine element (74); a rotary shaft (76) connected to the turbine element (74) and lying within the tubular member (72), a pump element (68); and a rotary member (78) connected to the pump element (68) and surrounding the tubular member (72), the inlet passage (64) to the torque converter being provided between the rotary member (78) and the tubular member (72) and the outlet passage (80) being provided between the tubular member (72) and the rotary shaft (76).

6. A torque converter according to claim 4 or claim 5, further including a reactor element (70) to which the tubular member (72) is connected.

**Revendications**

1. Système de commande de transmission (10) comprenant un convertisseur de couple (66) ayant des passages d'entrée et de sortie de fluide (64, 80), une source de fluide sous pression (12), une soupape de régulation de pression (20) pour faire passer le fluide de la source (12) au-dessus d'une pression présélectionnée vers le passage d'entrée de fluide (64), un échangeur de chaleur (82) relié au passage de sortie (80), une soupape de décompression (88) permettant au fluide de circuler en contournant le convertisseur de couple (66) et l'échangeur de chaleur (82), et un passage de limitation de débit (96) capable de relier les passages d'entrée et de sortie (64, 80), caractérisé en ce que les passages d'entrée et de sortie de fluide (64, 80) sont délimités sur les côtés radialement extérieur et intérieur d'un élément tubulaire (72) du convertisseur de couple (66) et en ce que le passage de limitation de débit (96) relie directement et en permanence les passages d'entrée et de sortie de fluide (64, 80) à travers l'élément tubulaire.

2. Système de commande de transmission selon la revendication 1, dans lequel le convertisseur de couple (66) comporte un élément de turbine (74); un arbre rotatif (76) relié à l'élément de turbine (74) et logé à l'intérieur de l'élément tubulaire (72); un élément de pompe (68); et un élément rotatif (78) relié à l'élément de pompe (68) et entourant l'élément tubulaire (72), le passage d'entrée (64) vers le convertisseur de couple étant prévu entre l'élément rotatif (78) et l'élément tubulaire (72), tandis que le passage de sortie (80) est prévu entre l'élément tubulaire (72) et l'arbre rotatif (76).

3. Système de commande de transmission selon la revendication 1 ou la revendication 2, dans lequel le convertisseur de couple (66) comporte un élément de réaction (70) auquel l'élément tubulaire (72) est relié.

4. Convertisseur de couple (66) pour un système de commande de transmission (10) ayant une source de fluide sous pression (12), une soupape de régulation de pression (20) pour faire passer le fluide de la source (12) au-dessus d'une pression présélectionnée vers le convertisseur de couple (66), un échangeur de chaleur (82) relié au passage de sortie (80) et une soupape de décompression (88) permettant au fluide de circuler en contournant le convertisseur de couple (66) et l'échangeur de chaleur, le convertisseur de couple (66) étant contourné par un passage de limitation de débit (96) capable de relier les passages d'entrée et de sortie de fluide (64, 80), caractérisé en ce que les passages d'entrée et de sortie (64, 80) sont délimités sur les côtés radialement extérieur et intérieur d'un élément tubulaire (72) du convertisseur de couple (66), et en ce que le passage de limitation de débit relie directement et en permanence les passages d'entrée et de sortie à travers l'élément tubulaire (72).

5. Convertisseur de couple selon la revendication 4, comprenant en outre un élément de turbine (74); un arbre rotatif (76) relié à l'élément de turbine (74) et logé dans l'élément tubulaire (72), un élément de pompe (68); et un élément rotatif (78) relié à l'élément de pompe (68) et entourant l'élément tubulaire (72), le passage d'entrée (64) vers le convertisseur de couple étant prévu entre l'élément rotatif (78) et l'élément tubulaire (72), tandis que le passage de sortie (80) est prévu entre l'élément tubulaire (72) et l'arbre rotatif (76).

6. Convertisseur de couple selon la revendication 4 ou la revendication 5, comprenant en outre un élément de réaction (70) auquel l'élément tubulaire (72) est relié.

**Patentansprüche**

1. Ein Getriebesteuersystem (10), welches folgendes aufweist: Einen Drehmomentwandler (66) mit Strömungsmitteleinlaß- und Auslaß-Durchlässen (64, 80), eine Strömungsmitteldruckquelle (12), ein Druckregulierventil (20) zum Durchlassen von Strömungsmittel von der Quelle (12) oberhalb eines vorgewählten Drucks zu dem Strömungsmitteleinlaß-Durchlaß (64), einen Wärmeaustauscher (82), verbunden mit dem Auslaßdurchlaß (80), ein Druckfreigabeventil (88), welches den Strömungsmittelfluß in Bypaßbeziehung zum Drehmomentwandler (66) und zum Wärmeaustauscher (82) gestattet, und einen Strömungsbegrenzungsdurchlaß (96), der in der Lage ist, die Strömungsmitteleinlaß- und Auslaß-Durchlässe (64, 80) zu verbinden, dadurch gekennzeichnet, daß die Strömungsmitteleinlaß- und Auslaß-Durchlässe (64, 80) an den radial äußeren und inneren Seiten eines Rohrglieds (72) des Drehmomentwandlers (66) definiert sind, und daß der Strömungsbegrenzungsdurchlaß (96) dauernd die Strömungsmitteleinlaß- und Auslaß-Durchlässe (64, 80) durch das Rohrglied verbindet.

2. Getriebesteuersystem nach Anspruch 1, wobei der Drehmomentwandler (66) folgendes aufweist: Ein Turbinenelement (74), eine mit dem Turbinenelement (74) verbundene Drehwelle (76), die innerhalb des Rohrglieds (72) liegt, ein Pumpenelement (68), und ein Drehglied (78) verbunden mit dem Pumpenelement (68) und das Rohrglied (72) umgebend, wobei der Einlaß-Durchlaß (64) zum Drehmomentwandler zwischen dem Drehglied (78) und dem Rohrglied (72) vorgesehen ist, und wobei der Auslaß-Durchlaß (80) zwischen dem Rohrglied (72) und der Drehwelle (76) vorgesehen ist.

3. Getriebesteuersystem nach Anspruch 1 oder 2, wobei der Drehmomentwandler (66) ein Reaktorelement (70) aufweist, mit dem das Rohrglied (72) verbunden ist.

4. Drehmomentwandler (66) für ein Getriebesteuersystem (10) mit einer Strömungsmitteldruckquelle (12), einem Druckregulierventil (20) zum Durchleiten von Strömungsmittel von der Quelle (12) oberhalb eines vorgewählten Drucks zum Drehmomentwandler (66), ferner mit einem Wärmeaustauscher (82) verbunden mit dem Auslaß-Durchlaß (80) und einem Druckfreigabeventil (88), welches den Strömungsmittelfluß in Bypaßbeziehung zum Drehmomentwandler (66) und dem Wärmeaustauscher gestattet, wobei der Drehmomentwandler (66) einen Bypaß durch einen Strömungsbegrenzungsdurchlaß (96) besitzt, der in der Lage ist, die Strömungsmitteleinlaß- und Auslaß-Durchlässe (64, 80) zu verbinden, dadurch gekennzeichnet, daß die Strömungsmitteleinlaß- und Auslaß-Durchlässe (64, 80) in den radial äußeren und inneren Seiten eines Rohrglieds (72) des Drehmomentwandlers (66) definiert sind, und daß der Strömungsmittelbegrenzungsdurchlaß dauerhaft die Einlaß- und Auslaß-Durchlässe durch das Rohrglied (72) direkt verbindet.

5. Drehmoment wandler nach Anspruch 4, der ferner folgendes aufweist: Ein Turbinenelement (74), eine Drehwelle (76) verbunden mit dem Turbinenelement (74) und innerhalb des Rohrglieds (72) liegend, ein Pumpenelement (68) und ein Drehglied (78) verbunden mit dem Pumpenelement (68) und das Rohrglied (72) umgebend, wobei der Einlaß-Durchlaß (64) zum Drehmomentwandler zwischen dem Drehglied (78) und dem Rohrglied (72) vorgesehen ist, und wobei der Auslaß-Durchlaß (80) zwischen dem Rohrglied (72) und der Drehwelle (76) vorgesehen ist.

6. Drehmomentwandler nach Anspruch 4 oder 5, ferner mit einem Reaktorelement (70), mit dem das Rohrglied (72) verbunden ist.

## FIG.1.

## FIG.2.

ENGINE